# EUROPÄISCHE PATENTSCHRIFT

(11) **EP 3 245 710 B1**
(45) Veröffentlichungstag und Bekanntmachung des Hinweises auf die Patenterteilung: **28.05.2025**
(21) Anmeldenummer: 16700359.9
(22) Anmeldetag: 12.01.2016
(51) Int. Cl.: H02K 5/132, H02K 5/22, H02K 11/33

(54) **UNTERWASSER-ANTRIEBS-EINHEIT**
UNDERWATER DRIVE UNIT
UNITÉ DE PROPULSION SOUS-MARINE

(30) Priorität: 14.01.2015 DE 102015100502
(43) Veröffentlichungstag der Anmeldung: 22.11.2017
(73) Patentinhaber: CAYAGO TEC GmbH, 32108 Bad Salzuflen (DE)
(72) Erfinder: WALPURGIS, Hans-Peter, 6370 Kitzbühel (AT)
(74) Vertreter: Herrmann, Jochen
(86) Internationale Anmeldenummer: PCT/EP2016/050484
(87) Internationale Veröffentlichungsnummer: WO 2016/113264

(56) Entgegenhaltungen:
- EP-A1- 2 500 575
- EP-A2- 1 104 080
- WO-A1-2014/042304
- DE-A1- 10 138 904
- DE-A1- 102004 049 615
- DE-A1- 102011 056 383
- DE-A1- 102012 109 863
- JP-A- 2002 362 488
- US-A1- 2015 217 847

## Beschreibung

Die Erfindung betrifft eine Unterwasser-Antriebs-Einheit für eine Schwimm- und Tauchhilfe, wobei der Unterwasser-Antriebs-Einheit zumindest ein Propeller, ein Elektromotor mit einem Motorgehäuse, eine Motorwelle, welche die Antriebskraft des Elektromotors auf den Propeller überträgt, und ein Steuergerät, welches in einem Elektronikgehäuse angeordnet und über Anschlusskabel mit dem Elektromotor verbunden ist, zugeordnet sind und wobei zumindest ein Teil der Unterwasser-Antriebs-Einheit in zumindest einem mit Wasser flutbaren Raum in einem Rumpf der Schwimm- und Tauchhilfe angeordnet ist.

Derartige Schwimm- und Tauchhilfe sind aus der DE 10 2004 049 615 B4 bekannt. Sie weisen eine Griffanordnung auf, an der sich ein Benutzer festhalten kann, während er mit einem Teilbereich seines Oberkörpers oberseitig auf dem Rumpf des Wasserfahrzeuges aufliegt. Innerhalb des Rumpfes ist ein Strömungskanal angeordnet, in dem ein Propeller untergebracht ist. Der Propeller wird von einem Elektromotor angetrieben, der über Akkumulatoren mit Strom versorgt wird. Dazu ist der Propeller über eine Antriebswelle mit dem Elektromotor verbunden. Der Elektromotor ist in einem Aufnahmegehäuse, welches bis zum Propeller geführt ist, gehalten. Die Antriebswelle ist über eine Dichtkassette aus dem Aufnahmegehäuse zu dem Propeller geführt. Auf der dem Propeller abgewandten Seite ist das Aufnahmegehäuse durch einen Gehäusedeckel verschlossen. Das somit wasserdicht ausgeführte Aufnahmegehäuse mit dem Elektromotor kann in einem von Wasser umfluteten Raum im Rumpf der Schwimm- und Tauchhilfe angeordnet sein und so seine Verlustwärme an das vorbeiströmende Wasser abgeben. Dazu ist es vorgesehen, dass der Propeller, der Elektromotor und ein zugehöriges Steuergerät als Unterwasser-Antriebs-Einheit ausgebildet und in dem Strömungskanal angeordnet sind. Das Steuergerät ist dazu ebenfalls in einem wasserdichten Gehäuse angeordnet. Eine weitere Schwimm- und Tauchhilfe ist in JP 2002-362488 A offenbart. EP 1 104 080 A2 offenbart eine wasserdichte Verbindung zwischen einem Motorgehäuse und einem Steuergerätgehäuse.

Um den Elektromotor mit Hilfe des Steuergerätes ansteuern zu können, sind entsprechende elektrische Verbindungen zwischen dem Steuergerät und dem Elektromotor erforderlich. Dazu müssen sowohl an dem Aufnahmegehäuse des Elektromotors wie auch an dem wasserdichten Gehäuse des Steuergeräts Durchführungen vorgesehen werden, durch welche die Verbindungskabel geführt sind und welche separat abgedichtet werden müssen. Dies ist in der Herstellung aufwändig, fehleranfällig und erschwert die Montage der Unterwasser-Antriebs-Einheit.

Es ist Aufgabe der Erfindung, eine wasserdichte Unterwasser-Antriebs-Einheit für eine Schwimm- und Tauchhilfe bereitzustellen, welche z.B. eine einfache, wassergeschützt ausgeführte elektrische Verbindung zwischen einem Elektromotor und einem Steuergerät der Unterwasser-Antriebs-Einheit ermöglicht.

Die Aufgabe der Erfindung wird durch die Merkmale des Anspruchs 1 gelöst, indem das Elektronikgehäuse umlaufend zu einer Öffnung des Elektronikgehäuses und zu einer Gehäuseöffnung des Motorgehäuses wasserdicht mit dem Motorgehäuse verbunden ist. Die Anschlusskabel zwischen dem Steuergerät und dem Elektromotor können so durch die Öffnung des Elektronikgehäuses und die Gehäuseöffnung des Motorgehäuses geführt werden, ohne dass sie an den jeweiligen Gehäusen einzeln abgedichtet werden müssen. Es ist lediglich der Übergang zwischen den Gehäusen abzudichten. Dies ermöglicht eine einfach und kostengünstig herstellbare sowie vor eindringendem Wasser geschützte elektrische Verbindung zwischen dem Steuergerät und dem Elektromotor.

Entsprechend einer besonders bevorzugten Ausführungsvariante der Erfindung kann es vorgesehen sein, dass das Elektronikgehäuse wasserdicht steckbar mit dem Motorgehäuse verbunden ist. Das Elektronikgehäuse und das Motorgehäuse können so einfach, schnell und ohne zusätzliche Befestigungselemente wasserdicht verbunden werden. Durch die steckbare Verbindung können die Montagezeit der Unterwasser-Antriebs-Einheit und damit die Herstellkosten gesenkt werden. Weiterhin ermöglicht eine steckbare Verbindung einen einfachen Zugang im Servicefall, da das Motorgehäuse und das Elektronikgehäuse leicht voneinander getrennt und separat geöffnet werden können. Aus dem Motorgehäuse durch die Gehäuseöffnung herausgeführte Anschlusskabel können bei geöffnetem Elektronikgehäuse mit dem Steuergerät verbunden werden. Anschließend wird das Elektronikgehäuse geschlossen. Dabei werden die Anschlusskabel so angeordnet, dass sie durch die Öffnung des Elektronikgehäuses geführt sind. Anschließend werden das Motorgehäuse und das Elektronikgehäuse zusammengesteckt, so dass die Öffnung des Elektronikgehäuses und die Gehäuseöffnung des Motorgehäuses durch die Steckverbindung wasserdicht eingehaust sind. Alternativ kann es vorgesehen sein, dass zwischen dem Elektromotor und dem Steuergerät im Bereich der Öffnung des Elektronikgehäuses und der Gehäuseöffnung des Motorgehäuses eine Steckverbindung für die vorgesehenen elektrischen Verbindungen angeordnet ist.

Eine besonders einfache Montage der Unterwasser-Antriebs-Einheit kann dadurch erreicht werden, dass das Elektronikgehäuse mit einem die Öffnung umlaufenden Abdichtabschnitt das Motorgehäuse in einem Anschlussbereich steckbar umgreift und dass zwischen dem Abdichtabschnitt und dem Anschlussbereich Dichtelemente vorgesehen sind. Das Elektronikgehäuse kann so mit seinem Abdichtabschnitt einfach auf das Motorgehäuse aufgesteckt werden. Die Abdichtung erfolgt durch die Dichtelemente zwischen dem Abdichtabschnitt und dem Anschlussbereich, so dass die Öffnung des Elektronikgehäuses und die Gehäuseöffnung des Motorgehäuses vor eindringendem Wasser geschützt sind.

Eine einfach herstellbare und gut abdichtende Steckverbindung zwischen dem Motorgehäuse und dem Elektronikgehäuse kann dadurch bereitgestellt werden, dass an dem Motorgehäuse umlaufend zum Anschlussbereich zumindest eine quer zur Aufsteckrichtung des Elektronikgehäuses verlaufende, von Stegen begrenzte Rille angeordnet ist und dass ein Dichtring als Dichtelement in der Rille gehalten ist. Die Stege können in einem Arbeitsschritt bei der Herstellung des Motorgehäuses angeformt werden. Zur Abdichtung muss dann lediglich ein Dichtring in die Rille eingelegt und das Elektronikgehäuse mit seinem Abdichtabschnitt über den Anschlussbereich des Motorgehäuses geschoben werden. Durch die quer zur Aufsteckrichtung des Elektronikgehäuses ausgerichtete Rille ist der Dichtring in seiner Position festgelegt und kann sich beim Aufstecken des Elektronikgehäuses nicht verschieben. Der Dichtring ist bei aufgestecktem Elektronikgehäuse zwischen dem Abdichtabschnitt und dem Anschlussbereich eingeklemmt, so dass eine umlaufend abgedichtete Verbindung gebildet ist. Durch den eingeklemmten Dichtring ist das Elektronikgehäuse mit seinem Abdichtabschnitt an dem Anschlussbereich des Motorgehäuses gehalten, so dass beide nur mit einer bestimmten Abzugskraft voneinander getrennt werden können. Vorteilhaft sind mehrere durch Stege getrennte Rillen und Dichtringe im Bereich des Anschlussbereichs vorgesehen. Dadurch kann auch bei Defekt eines Dichtrings vermieden werden, dass Wasser in das Motorgehäuse und das Elektronikgehäuse eindringt. Zusätzlich wird die erforderliche Kraft, die zum Abziehen des Elektronikgehäuses von dem Motorgehäuse aufgebracht werden muss, erhöht. Ein weiterer Vorteil ergibt sich, wenn die innere Fläche des Abdichtabschnitts des Elektronikgehäuses unmittelbar an den Stegen des Anschlussbereichs anliegend oder gering beabstandet zu den Stegen angeordnet ist. Damit ist das Elektronikgehäuse über einen axial ausgedehnten Bereich radial gegenüber dem Motorgehäuse festgelegt. Das Elektronikgehäuse kann dadurch im aufgesteckten Zustand nicht gegenüber dem Motorgehäuse weggeknickt werden.

Vorteilhaft kann es vorgesehen sein, dass das Motorgehäuse eine im Wesentlichen zylindrische Außenkontur aufweist, dass das Motorgehäuse auf seiner dem Propeller abgewandten Seite offen ist, dass der Anschlussbereich umlaufend zu der so gebildeten Gehäuseöffnung auf der Außenkontur des Motorgehäuses angeordnet ist und dass das Elektronikgehäuse mit seinem Abdichtabschnitt von der dem Propeller abgewandten Seite auf das Motorgehäuse derart aufsteckbar ist, dass der Abdichtabschnitt des Elektronikgehäuses den Anschlussbereich umgreift. Die zylindrische Außenkontur ermöglicht eine einfache umlaufende Abdichtung, beispielsweise mit Dichtringen. Schwer abdichtbare Bereiche, wie Ecken und Kanten, werden vermieden. Bei einer zylindrischen Außenkontur des Anschlussbereichs und des den Anschlussbereich umgreifenden Abdichtabschnitts kann dieser einfach und ohne zu verkanten auf den Anschlussbereich aufgesteckt werden. Da das komplette, dem Propeller abgewandte rückseitige Ende des Motors innerhalb des durch den Anschlussbereich und den Abdichtbereich umschlossenen Bereichs liegt, kann das Motorgehäuse hier offen bzw. nicht wasserdicht ausgeführt werden. Dies erleichtert den Zusammenbau des Elektromotors. Elektrische Verbindungskabel können einfach aus dem Motorgehäuse heraus- und der Steuereinheit zugeführt werden. Ein gesondert abgedichteter rückseitiger Deckel ist nicht erforderlich und kann eingespart werden.

Eine zusätzliche Abdichtung der Kabelaustritte aus dem Elektronikgehäuse beziehungsweise aus dem Motorgehäuse kann dadurch vermieden werden, dass die Anschlusskabel durch die Öffnung des Elektronikgehäuses und durch die Gehäuseöffnung des Motorgehäuses geführt sind.

Eine Abdichtung des Motorgehäuses in seinem dem Elektronikgehäuse gegenüberliegenden Bereich wird erfindungsgemäß dadurch erreicht, dass die Motorwelle zumindest bereichsweise von einem Außenrohr umgeben ist, dass das Außenrohr gegenüber dem flutbaren Raum derart abgedichtet ist, dass zwischen dem Außenrohr und der Motorwelle ein gegenüber dem flutbaren Raum hin abgedichteter Raum gebildet ist und dass das Außenrohr mit seinem dem Elektromotor zugewandten Ende mittelbar oder unmittelbar mit dem Motorgehäuse des Elektromotors dicht verbunden ist. Dadurch wird eine vollständig abgedichtete Unterwasser-Antriebs-Einheit gebildet, welche als Einheit in einem mit Wasser flutbaren Raum der Schwimm- und Tauchhilfe montiert werden kann.

Die Erfindung wird im Folgenden anhand eines in den Zeichnungen dargestellten Ausführungsbeispiels näher erläutert. Es zeigen:
- Fig. 1: in perspektivischer Seitenansicht von hinten eine Schwimm- und Tauchhilfe,
- Fig. 2: einen Teil einer Unterwasser-Antriebs-Einheit mit einem Elektromotor,
- Fig. 3: den in Figur 2 gezeigten Teil der Unterwasser-Antriebs-Einheit in einer Schnittdarstellung,
- Fig. 4: den in Figur 3 gezeigten Elektromotor in einer vergrößerten Schnittdarstellung,
- Fig. 5: einen in Figur 3 gezeigten Propellerabschnitt in einer vergrößerten Schnittdarstellung,
- Fig. 6: die in Figur 1 gezeigte Schwimm- und Tauchhilfe in einer seitlichen Schnittdarstellung,
- Fig. 7: einen in Figur 6 gezeigten Ausschnitt der Schwimm- und Tauchhilfe im Bereich des Elektromotors und
- Fig. 8: einen in Figur 6 gezeigten Ausschnitt der Schwimm- und Tauchhilfe im Bereich ihres Hecks.

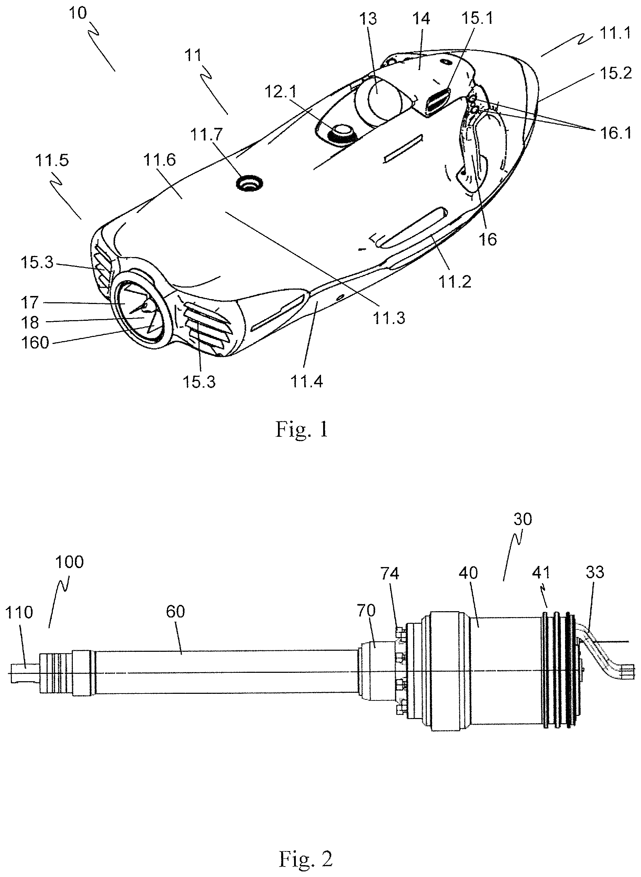

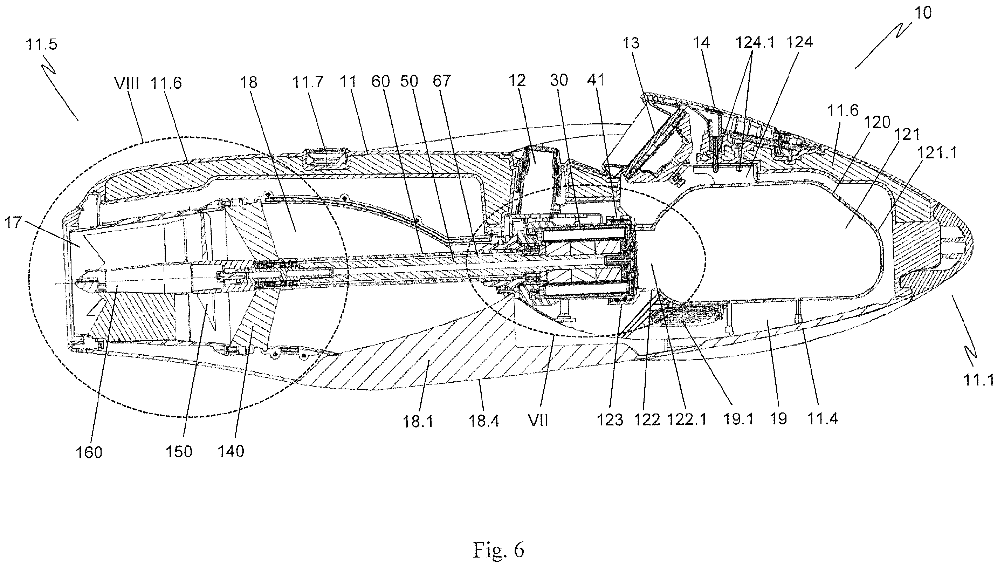

Figur 1 zeigt in perspektivischer Seitenansicht von hinten eine Schwimm- und Tauchhilfe 10. Die Schwimm- und Tauchhilfe 10 weist einen Rumpf 11 auf. Der Rumpf 10 ist aus einem Oberteil 11.6 und einem Unterteil 11.4 zusammengesetzt. Das Oberteil 11.6 ist mit zwei Haltegriffen 16 ausgerüstet, die beidseitig des Rumpfes 11 angeordnet sind. An diesen Haltegriffen 16 kann sich ein Benutzer festhalten und die Schwimm- und Tauchhilfe 10 mit an den Haltegriffen 16 angebrachten Bedienelementen 16.1 steuern. Insbesondere kann hier die Motorleistung der Schwimm- und Tauchhilfe 10 variiert werden. Der Benutzer, der sich an den Haltegriffen 16 festhält, liegt mit seinem Oberkörper auf einer Auflagefläche 11.3 im Bereich hinter einem Display 13 auf dem Oberteil 11.6 auf. An der Auflagefläche 11.3 ist eine Halterung 11.7 zur Befestigung eines Gurtsystems angebracht, mit dem sich der Benutzer an der Schwimm- und Tauchhilfe 10 angurten kann. Vor der Auflagefläche 11.3 ist ein Verschluss 12.1 für eine dahinter liegende, in Figur 6 gezeigte Ladebuchse 12 angeordnet. Über die Ladebuchse 12 können in dem Rumpf 11 enthaltene Akkumulatoren aufgeladen werden.

Seitlich am Rumpf 11 sind Tragegriffe 11.2 angeordnet, an denen die Schwimm- und Tauchhilfe 10 außerhalb des Wassers getragen werden kann.

In Fahrtrichtung vor dem Display 13 und zwischen den beiden Haltegriffen 16 ist eine abnehmbare Abdeckhaube 14 an dem Rumpf 11 befestigt. Die Abdeckhaube 14 überdeckt einen nicht gezeigten Montagebereich der Schwimm- und Tauchhilfe 10. Seitlich sind Entlüftungsöffnungen 15.1 in der Abdeckhaube 15 vorgesehen, welche mit einem in dem Rumpf 11 vorgesehenen und in Figur 6 gezeigten Flutungsraum 19 verbunden sind.

Im Bereich des Bugs 11.1 sind Wassereintrittsöffnungen 15.2 vorgesehen, durch welche Wasser in den Flutungsraum 19 einströmen kann. Der Flutungsraum 19 kann dazu über die Entlüftungsöffnungen 15.1 der Abdeckhaube 14 entlüftet werden. Durch den mit Wasser gefüllten Flutungsraum 19 wird der Auftrieb der Schwimm- und Tauchhilfe 10 so eingestellt, dass eine vorgegebene Auftriebskraft erhalten bleibt, so dass sowohl ein Schwimm- wie auch ein Tauchbetrieb möglich ist. An dem Heck 11.5 der Schwimm- und Tauchhilfe 10 sind durch Lamellen abgedeckte Wasseraustrittsöffnungen 15.3 angebracht, die ebenfalls mit dem Flutungsraum 19 in Verbindung stehen. Der Flutungsraum 19 wird, sobald die Schwimm- und Tauchhilfe 10 in das Wasser gesetzt wird, mit Wasser geflutet, das durch die Wassereintrittsöffnungen 15.2 und Wasseraustrittsöffnungen 15.3 eindringt. Sobald die Schwimm- und Tauchhilfe 10 in den Fahrbetrieb übergeht, wird in dem Flutungsraum 19 eine Strömung erzeugt. Dabei tritt das Wasser durch die Wassereintrittsöffnungen 15.2 in den Flutungsraum 19 ein. Es durchströmt den Flutungsraum 19 und umspült dabei in dem Flutungsraum 19 gehaltene elektrische Baueinheiten, wie beispielsweise einen in Figur 2 gezeigten Elektromotor 30 zum Antrieb der Schwimm- und Tauchhilfe 10 oder die zugehörigen Akkumulatoren. Dabei nimmt das Wasser die Verlustleistung der elektrischen Baueinheiten auf und kühlt diese. Nach Durchströmen des Flutungsraums 19 verlässt das Wasser diesen durch die Wasseraustrittsöffnungen 15.3, die symmetrisch beidseitig eines Strahlaustritts 17 eines Strömungskanals 18 angeordnet sind. In dem Strömungskanal 18 ist endseitig ein Stator 160 angeordnet, welcher einer Rotation des durch den Strömungskanal 18 strömenden Wassers entgegenwirkt, so dass das Wasser aus dem Strömungskanal 18 möglichst rotationsfrei ausströmt. Die Rotationsenergie des Wassers wird dabei in eine lineare Bewegungsenergie umgewandelt und dient damit dem Antrieb der Schwimm- und Tauchhilfe 10.

Figur 2 zeigt einen Teil einer Unterwasser-Antriebs-Einheit der Schwimm- und Tauchhilfe 10 mit einem Elektromotor 30.

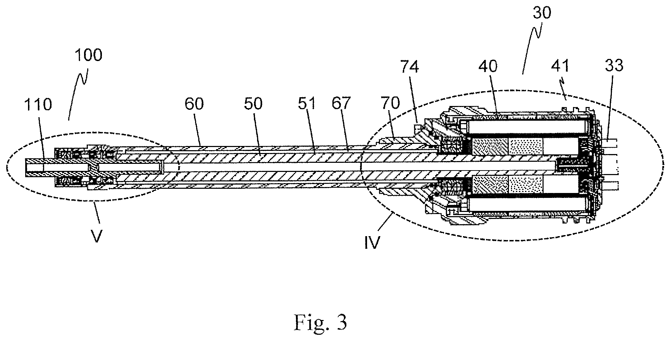

Der Elektromotor 30 ist von einem Motorgehäuse 40 umgeben, welches endseitig einen Anschlussbereich 41 aufweist. Auf der Seite des Anschlussbereichs 41 sind Anschlusskabel 33 aus dem Motorgehäuse 40 geführt. Gegenüberliegend zum Anschlussbereich 41 ist ein Formadapter 70 mittels Zylinderkopfschrauben 74 mit dem Motorgehäuse 40 verbunden. In dem Formadapter 70 ist ein Außenrohr 40 aufgenommen, welches eine in Figur 3 gezeigte Motorwelle 50 umschließt. Auf der dem Elektromotor 30 gegenüberliegenden Seite endet das Außenrohr 60 in einem Propellerabschnitt 100, in dem ein Wellenstumpf 110 angeordnet ist.

Der Wellenstumpf 110 dient der Montage eines in Figur 6 gezeigten Propellers 150 zum Antrieb der Schwimm- und Tauchhilfe 10. An dem Anschlussbereich 41 des Elektromotors 30 kann ein ebenfalls in Figur 6 dargestelltes Elektronikgehäuse 120 angeschlossen werden, welches ein nicht dargestelltes Steuergerät zur Ansteuerung des Elektromotors 30 aufweist. Das Motorgehäuse 40 bildet zusammen mit dem Formadapter 70, dem Außenrohr 60 und dem angeschlossenen Elektronikgehäuse 120 eine wasserdichte Baueinheit, welche mit Hilfe der Zylinderkopfschrauben 74 innerhalb wasserdurchfluteter Bereiche des Rumpfes 11 der Schwimm- und Tauchhilfe 10 befestigt werden kann.

Figur 3 zeigt den in Figur 2 gezeigten Teil der Unterwasser-Antriebs-Einheit in einer Schnittdarstellung. Gleiche Bauteile sind dabei wie zu Figur 2 eingeführt bezeichnet.

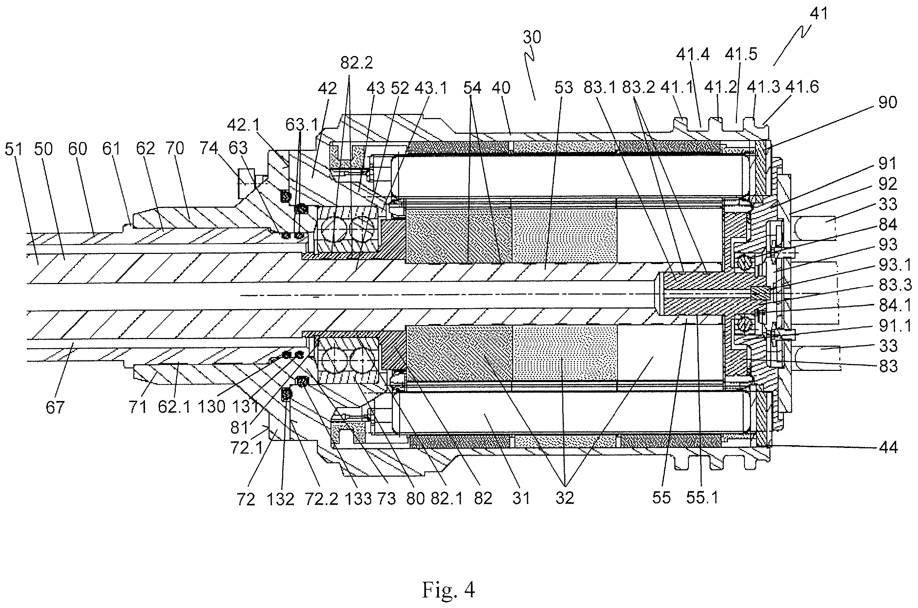

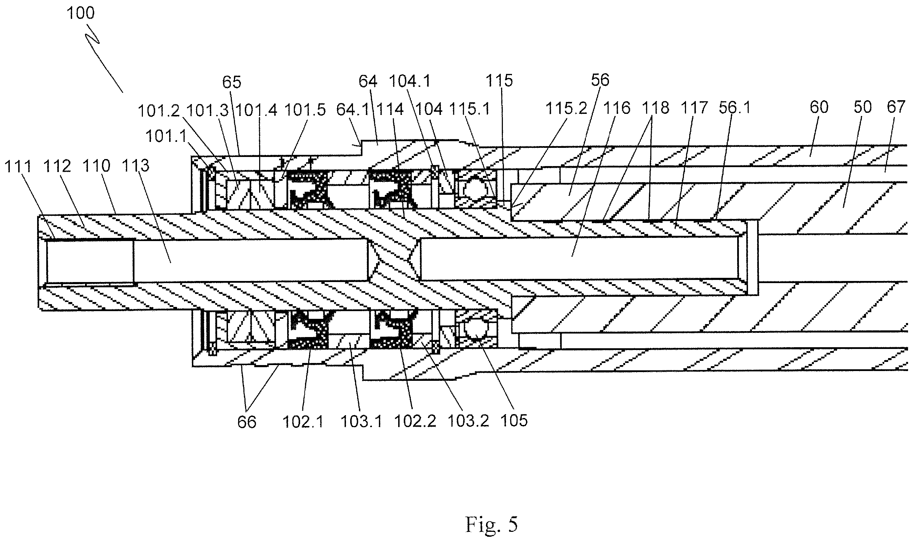

Innerhalb des Außenrohres 60 ist die Antriebswelle 50 aufgenommen. Dabei ist insbesondere ein Mittelabschnitt 51 der Antriebswelle 50 innerhalb des Außenrohres 60 angeordnet. Ein Rotor 32 ist an einem Rotorabschnitt 53 der Motorwelle 50 befestigt, wie dies näher in Figur 4, welche den in Figur 3 mit IV gekennzeichneten Ausschnitt darstellt, gezeigt ist. Gegenüberliegend ist der Wellenstumpf 110 an einem zweiten Aufnahmeabschnitt 56 der Motorwelle 50 befestigt. Ein zugehöriger Ausschnitt V der Darstellung ist vergrößert in Figur 5 gezeigt.

Die Motorwelle 50 ist aus einem kohlenstofffaserverstärkten Kunststoff (CFK) hergestellt. Sie überträgt die von dem Elektromotor 30 erzeugte Antriebskraft auf den Wellenstumpf 110 und den an dem Wellenstumpf 110 montierten, in Figur 6 gezeigten Propeller 150.

CFK bietet gegenüber herkömmlich zur Herstellung von Motorwellen 50 verwendeten Materialien, wie beispielsweise Stahl, den Vorteil eines deutlich reduzierten Gewichts bei gleichzeitig sehr hoher Steifigkeit. Dies ist für die dargestellte Schwimm- und Tauchhilfe 10 von sehr großer Bedeutung, da diese außerhalb des Wassers möglichst leicht tragbar sein muss. Das Gewicht wird durch die Ausführung der Motorwelle 50 als Hohlwelle noch weiter reduziert, ohne die Belastbarkeit der Motorwelle 50 wesentlich zu verringern. Im Vergleich zu Stahl neigt eine aus CFK hergestellte Motorwelle 50 deutlich weniger zur Schwingungen, was zu einem verbesserten Rundlauf und zu einer geringeren Geräuschentwicklung führt. Weiterhin führen das geringere Gewicht und die reduzierte Schwingung zu einer Reduzierung der Belastung der Lager, mit welchen die Motorwelle 50 um ihre Mittellängsachse drehbar gelagert ist, wodurch der Verschleiß der Lager reduziert und damit deren Standzeit erhöht wird. Die träge Masse der Motorwelle 50 aus CFK ist gegenüber einer Motorwelle 50 aus Stahl deutlich reduziert, wodurch sich eine höhere Dynamik bei gewünschten Änderungen der Drehzahl der Motorwelle 50 und damit des Propellers 150 ergibt. Gleichzeitig sinkt der Energieverbrauch zum Beschleunigen der Motorwelle 50 mit dem Propeller 150, was zu einer Verlängerung der Betriebsdauer der durch Akkumulatoren mit Energie versorgen Schwimm- und Tauchhilfe 10 führt.

Um die Steifigkeit der Motorwelle 50 zu erhöhen ist sie mehrschichtig aufgebaut. Einer inneren Schicht, in der Kohlenstofffasermatten mit unterschiedlicher Orientierung der Kohlenstofffasern innerhalb der Kunststoffmatrix angeordnet sind, folgte eine Schicht mit ausgerichteten Kohlenstofffasern. Diese sind vorzugsweise als hochmodulige Kohlenstofffasern, welche in Faserrichtung einen sehr hohen E-Modul von beispielsweise >400.000N/mm² aufweisen, ausgeführt. Im vorliegenden Ausführungsbeispiel sind die hochmoduligen Kohlenstofffasern im Wesentlichen in Richtung der Längserstreckung der Motorwelle 50 ausgerichtet, um so die Zugfestigkeit und Biegesteifigkeit der Motorwelle 50 zu erhöhen. Alternativ oder zusätzlich dazu kann auch eine CFK-Schicht mit quer zur Längserstreckung der Motorwelle 50 angeordneten hochmoduligen Kohlenstofffasern vorgesehen sein. In dieser Anordnung erhöhen die zusätzlichen Kohlenstofffasern die Torsionssteifigkeit der Motorwelle 50.

Die Oberfläche der Motorwelle 50 ist bereichsweise überdreht, geschliffen oder poliert. Durch diese Nachbehandlungsschritte wird eine exakte rotationssymmetrische Kontur der Motorwelle 50 erhalten, was zu einem guten Rundlauf führt. Risse in der Oberfläche werden entfernt und damit Kerbspannungen, welche sich bei mechanischer Belastung an den Rissenden ausbilden, vermieden oder zumindest reduziert. Dadurch sinkt die Bruchwahrscheinlichkeit der Motorwelle 50 und ihre Belastbarkeit steigt. Um zu vermeiden, dass die Kohlenstofffasern bei der Nachbearbeitung verletzt werden, weist die Motorwelle außen eine abschließende Kunststoffschicht auf, welche keine Kohlenstofffasern enthält.

Zwischen der Motorwelle 50 und dem Außenrohr 60 ist ein abgedichteter Raum 67 ausgebildet, in den von außen kein Wasser eindringt. Dadurch werden die Reibung zwischen der Motorwelle 50 und Wasser und damit Energieverluste vermieden. Weiterhin ist die Motorwelle 50 keinen seitlich einwirkenden Querkräften von vorbeiströmendem Wasser ausgesetzt. Dadurch werden die Lager der Motorwelle 50 weniger belastet. Weiterhin wird die Motorwelle 50 nicht durch von vorbeiströmendem Wasser übertragenen Querkräften verbogen, was sich in einem verbesserten und schwingungsfreien Rundlauf der Motorwelle 50 auswirkt und wodurch der Propeller 150 in seiner Position innerhalb des Strömungskanals 18 gehalten ist.

Figur 4 zeigt den in Figur 3 gezeigten Elektromotor 30 in einer vergrößerten Schnittdarstellung.

Die Motorwelle 50 aus kohlenstofffaserverstärktem Kunststoff ist aus dem Außenrohr 60 heraus in das Innere des Motorgehäuses 40 geführt. Ihr Durchmesser reduziert sich stufenartig im Bereich des Übergangs in das Motorgehäuse 40. Auf einen dadurch gebildeten Festlagerbereich 52 der Motorwelle 50 ist eine vordere Wuchtscheibe 82 mit einem angeformten Lagersitz 82.1 so weit aufgeschoben, dass sie an der gebildeten Stufe der Motorwelle 50 anliegt. Die vordere Wuchtscheibe 82 und der Lagersitz 82.1 sind mit der Motorwelle 50 durch Kleben stoffschlüssig verbunden. Auf der Innenfläche des Lagersitzes 82.1 und der Wuchtscheibe 82 sind dazu Klebstoffeintiefungen 82.2 mit definierter Tiefe vorgesehen, in die der Klebstoff in einer durch die Klebstoffeintiefungen 82.2 vorgegebenen, optimierten Klebstoffdicke eingebracht ist.

Im Anschluss an den Festlagerbereich 52 ist der Durchmesser der Motorwelle 50 noch einmal stufenförmig verjüngt. Die Motorwelle 50 bildet hier ihren Rotorabschnitt 53 aus. Der Rotor 32 des Elektromotors 30 ist auf den Rotorabschnitt 53 aufgesteckt und mit diesem verklebt. Zur Ausbildung einer optimalen Klebstoffdicke sind in die Oberfläche des Rotorabschnitts 53 Klebefugen 54 eingebracht. Der Rotor 32 ist dreiteilig ausbildet, so dass der Elektromotor 30 durch Verändern der Anzahl der installierten Rotorteile in unterschiedlichen Leistungsstufen ausgeführt werden kann. Umlaufend zu dem Rotor 32 ist ein Stator 31 des Elektromotors 30 vorgesehen. Der Stator 31 ist mit einer Vergussmasse in dem Motorgehäuse 40 eingegossen und so thermisch mit dem Motorgehäuse 40 gekoppelt. Die Verlustwärme des Elektromotors 30 kann dadurch gut an das Motorgehäuse 40 abgegeben werden.

Endseitig weist die Motorwelle 50 einen ersten Aufnahmeabschnitt 55 auf, in dem eine Wuchtscheibenaufnahme 55.1 in Form einer axial angeordneten Bohrung eingebracht ist. Die Wuchtscheibenaufnahme 55.1 weist einen größeren Durchmesser als der innere Durchmesser der als Hohlwelle ausgeführten Motorwelle 50 auf. In der Wuchtscheibenaufnahme 55.1 ist eine hintere Wuchtscheibe 83 mit einem axial angeformten Zapfen 83.1 gehalten. Der Durchmesser des Zapfens 83.1 ist passgenau zu dem Durchmesser der Wuchtscheibenaufnahme 55.1 ausgelegt, so dass auch bei hohen Umdrehungen der Motorwelle 50 die hintere Wuchtscheibe 83 sicher geführt ist. Der Zapfen 83.1 ist in die Wuchtscheibenaufnahme 55.1 eingeklebt. Dazu weist der Zapfen 83.1 umlaufende Kleberillen 83.2 auf, welche die Ausbildung einer optimalen Klebstoffdicke bewirken. Auf der dem Zapfen 83.1 gegenüberliegenden Seite der hinteren Wuchtscheibe 83 ist ein axial angeordneter Lagerstutzen 83.3 angeformt.

Der Elektromotor 30 ist mit dem zylinderförmigen Motorgehäuse 40 eingehaust. Zu seinem dem Formadapter 70 zugewandten Ende knickt der äußere Mantel des Motorgehäuses 40 in einen radial zur Motorwelle 50 hin ausgerichteten Montagebereich 42 ab. Der Montagebereich 42 bildet eine Adapterauflage 42.1, an der der Formadapter 70 flächig anliegt. Der Montagebereich 42 geht in einen beabstandet zum Festlagerbereich 52 der Motorwelle 50 angeordneten, zum Innenraum des Motorgehäuses 40 hin ausgerichteten Lagerbereich 43 über. Der Lagerbereich 43 bildet eine zylindrische Innenfläche, die zu dem Lagersitz 82.1 der vorderen Wuchtscheibe 82 hin ausgerichtet ist. An seinem dem Innenraum des Motorgehäuses 40 zugewandten Ende weist der Lagerbereich 43 einen Vorsprung 43.1 auf, der radial zur vorderen Wuchtscheibe 82 hin ausgerichtet ist.

Der Formadapter 70 weist die zylindrisch ausgeführte Rohraufnahme 71 auf, in die das Außenrohr 60 bis zu einem an das Außenrohr 60 umlaufend angeformten Außensteg 61 eingeschoben ist. Das Außenrohr 60 ist somit mit einem Formadapter-Anschlussbereich 62 in der Rohraufnahme 71 des Formadapters 70 über einen sich axial erstreckenden Bereich gehalten, so dass auch stärkere auf das Außenrohr 60 einwirkende Querkräfte abgefangen werden können. Der Formadapter-Anschlussbereich 62 ist mit der Rohraufnahme 71 verklebt. Zur Ausbildung einer gleichmäßigen Klebstoffschicht in einer geeigneten Dicke sind umlaufend in die äußere Oberfläche des Formadapter-Anschlussbereichs 62 Klebekerben 62.1 angeordnet, in welchen der Klebstoff angesammelt ist. In Richtung zum Motorgehäuse 40 hin weitet sich der Formadapter 70 auf und bildet einen umlaufenden Montagering 72 aus, der zum Motorgehäuse 40 hin eine radial verlaufende innere Montagefläche 72.2 und von dem Motorgehäuse 40 abgewandt eine radial verlaufende äußere Montagefläche 72.1 aufweist. Nach außen schließt der umlaufende Montagering 72 mit dem Montagebereich 42 des Motorgehäuses 40 ab. Der Formadapter 70 ist mit den Zylinderschrauben 74 derart an das Motorgehäuse 40 geschraubt, dass die innere Montagefläche 72.2 des Montagerings 72 flächig an der Adapterauflage 42.1 des Montagebereichs 42 anliegt. In die innere Montagefläche 72.2 ist eine umlaufende Nut eingearbeitet, in welcher ein dritter Dichtring 132 eingesetzt ist. Beim Anschrauben des Formadapters 70 legt sich der dritte Dichtring 132 an die Adapterauflage 42.1 an und dichtet so den inneren Bereich des Motorgehäuses 40 sowie den abgedichteten Raum 67 zwischen der Motorwelle 50 und dem Außenrohr 60 ab. Die äußere Montagefläche 72.1 dient der Montage der Antriebseinheit an den Rumpf 11 der Schwimm- und Tauchhilfe 10. Zum Motorgehäuse 40 hin weist der Formadapter 70 einen an den Montagering 72 anschließenden Klemmbereich 73 auf. Der Klemmbereich 73 greift in den von dem Montagebereich 42 des Motorgehäuses 40 gebildeten Innenraum ein und liegt mit seiner äußeren Oberfläche umlaufend an dem Montagebereich 42 an. Zwischen dem Klemmbereich 73 und dem Montagebereich 42 ist ein vierter Dichtring 133 in einer den Klemmbereich 73 außen umlaufenden Nut als weitere, in Reihe zu dem dritten Dichtring 132 angeordnete Abdichtung vorgesehen. Der Klemmbereich 73 weist einen geringfügig kleineren Innendurchmesser als die Rohraufnahme 71 auf, so dass auch der Außendurchmesser des Formadapter-Anschlussbereichs 62 des Außenrohrs 60 im Abschnitt des Klemmbereichs 73 einen Dichtungsbereich 63 mit einem kleineren Außendurchmesser aufzeigt. Zwischen dem Klemmbereich 73 und dem Dichtungsbereich 63 sind nacheinander ein erster Dichtring 130 und ein zweiter Dichtring 131 in jeweils einer den Formadapter-Anschlussbereich 62 umlaufenden Dichtringaufnahme 63.1 angeordnet, welche einen Wassereintritt zwischen dem Formadapter 70 und dem Außenrohr 60 verhindern.

Zwischen der zylindrischen Innenfläche des Lagerbereichs 43 des Motorgehäuses 40 und dem Lagersitz 82.1 der vorderen Wuchtscheibe 82 ist ein zweireihiges Rillenkugellager 80 angeordnet. Dabei liegt der Außenring des zweireihigen Rillenkugellagers 80 an dem Lagerbereich 43 und der Innenring an dem Lagersitz 82.1 an. Zum Innenraum des Motorgehäuses 40 liegt der Außenring des zweireihigen Rillenkugellagers 80 an dem Vorsprung 43.1 des Lagerbereichs 43 an, während der Innenring an einem Absatz der vorderen Wuchtscheibe 82 anliegt. Auf der gegenüberliegenden Seite ist der Innenring durch einen ersten Sicherungsring 81 gehalten, der in einer umlaufenden Nut im Lagersitz 82.1 festgelegt ist. Der Außenring des zweireihigen Rillenkugellagers 80 stößt auf dieser Seite gegen eine Abschlussfläche des Klemmbereichs 73 des Formadapters 70. Das zweireihige Rillenkugellager 80 ist somit entsprechend einem Festlager beidseitig in axialer Richtung gehalten.

An dem dem Formadapter 70 abgewandten Ende weist das Motorgehäuse 40 den Anschlussbereich 41 auf. Der Anschlussbereich 41 ist durch drei umlaufende Stege 41.1, 41.2, 41.3 gebildet, welche drei Rillen 41.4, 41.5, 41.6 voneinander trennen. In axialer Ausrichtung ist das Motorgehäuse 40 auf der dem Formadapter 70 abgewandten Stirnfläche durch eine Gehäuseöffnung 44 geöffnet.

Der äußere Bereich der Gehäuseöffnung 44 ist durch einen scheibenförmigen Aufnahmeschild 90 abgedeckt. Der Aufnahmeschild 90 ist radial ausgerichtet und schließt außen mit dem Motorgehäuse 40 ab. Der Aufnahmeschild 90 ist auf seiner dem Innenraum des Motorgehäuses 40 zugewandten Seite mit der Vergussmasse, die den Stator 31 trägt, fixiert. Radial nach innen gerichtet bildet der Aufnahmeschild 90 eine kreisförmige Aufnahme für einen Lagerschild 91. Der Lagerschild 91 ist ebenfalls kreisförmig und in axialer Richtung stufenförmig ins Innere des Motorgehäuses 40 verlaufend ausgebildet. Er bildet in seinem inneren Bereich einen axial ausgerichteten Lageransatz 91.1 aus, welcher radial beabstandet dem Lagerstutzen 83.3 der hinteren Wuchtscheibe 83 gegenübersteht. Zwischen dem Lageransatz 91.1 und dem Lagerstutzen 83.3 ist ein Wärmeausgleichslager 84 als einreihiges Rillenkugellager vorgesehen. Der Innenring des Wärmeausgleichslagers 84 ist auf der einen Seite durch die hintere Wuchtscheibe 83 und auf der gegenüberliegenden Seite durch einen zweiten Sicherungsring 84.1 axial gehalten. Dazu ist der zweite Sicherungsring 84.1 in eine umlaufende Nut des Lagerstutzens 83.3 eingeklemmt.

Ein Scheibenmagnet 93.1 ist in eine axial angeordnete Aufnahme des Lagerstutzens 83.3 der hinteren Wuchtscheibe 83 eingelassen.

Auf der Seite der Anschlusskabel 33 ist das Motorgehäuse 40 von einer Abdeckung 92 abgeschlossen. Die Abdeckung 92 liegt an dem Lagerschild 91 an und weist Durchbrüche zur Durchführung der Anschlusskabel 33 auf. An der Abdeckung 92 ist mit geeigneten Befestigungsmitteln ein Rotorlagesensor 93 angeordnet, der gegenüber dem Scheibenmagnet 93.1 positioniert ist.

Die vordere Wuchtscheibe 82 mit dem angeformten Lagersitz 82.1, der Rotor 32 sowie die hintere Wuchtscheibe 83 mit ihrem Zapfen 83.1 sind mit der aus kohlenstofffaserverstärktem Kunststoff hergestellten Motorwelle 50 verklebt. Durch die vorgesehenen Klebstoffeintiefungen 82.2, Klebefugen 54 und Kleberillen wird eine optimale Klebstoffdicke erreicht, um eine feste Verbindung zwischen den Bauteilen und der Motorwelle 50 zu erreichen, so dass auch hohe Kräfte übertragen werden können.

Die Motorwelle 50 ist im Bereich des Elektromotors 30 zweifach gelagert. Dabei ist das vordere zweireihige Rillenkugellager 80 als Festlager und das hintere Wärmeausgleichslager 84 als Loslager ausgeführt, so dass unterschiedliche Materialausdehnungen bei Temperaturwechsel ausgeglichen werden können. Ein ausreichender axialer Längenausgleich ist bei der vorgesehenen Motorwelle 50 aus CFK besonders wichtig, da kohlenstofffaserverstärkte Kunststoffe einen von Metallen abweichenden Wärmeausdehnungskoeffizienten aufweisen, der stark von der Orientierung der Kohlenstofffasern abhängt.

Die beiden Wuchtscheiben 82, 83 mit dem angeformten Lagersitz 82.1 beziehungsweise Lagerstutzen 83.3 sind aus Metall, im vorliegenden Ausführungsbeispiel aus Aluminium gefertigt. Die Innenringe des zweireihigen Rillenkugellagers 80 und des Wärmeausgleichlagers 84 liegen daher nicht unmittelbar auf dem faserverstärkten Kunststoffmaterial der Motorwelle 50, sondern auf mit der Motorwelle 50 verbundenen Kraft-Übertragungselementen aus Metall, wie sie durch den Lagersitz 82.1 und den Lagerstutzen 83.3 gebildet sind, auf. Durch diese Kraft-Übertragungselemente werden die von den Lagern auf die Motorwelle 50 übertragenen Kräfte auf eine größere Fläche verteilt, so dass der kohlenstofffaserverstärkte Kunststoff der Motorwelle 50 nicht durch eine lokal zu hohe Flächenpressung zerstört wird. Weiterhin wird ein erhöhter Abrieb der Motorwelle durch eine Relativbewegung zwischen der Motorwelle und den Innenringen vermieden. Der Lagersitz 82.1 der vorderen Wuchtscheibe 82 stellt ein Kraft-Übertragungselement dar, das umlaufend zur Motorwelle 50 angeordnet ist, während der Lagerstutzen 83.3 der hinteren Wuchtscheibe 83 ein Kraft-Übertragungselement darstellt, das als endseitige axiale Verlängerung der Motorwelle 50 ausgeführt ist. Die Motorwelle 50 kann durch Bohrungen, welche radial von außen in die Wuchtscheiben 82, 83 eingebracht werden, ausgewuchtet werden.

Der Formadapter 70 übernimmt mehrere Aufgaben. Er dient der seitlichen und axialen Festlegung des Außenrohres 60. Weiterhin dichtet er im Zusammenspiel mit den vorgesehenen Dichtringen 130, 131, 132, 133 den Innenraum des Motorgehäuses 40, den Bereich des zweireihigen Rillenkugellagers 80 sowie den abgedichteten Raum 67 zwischen dem Außenrohr 60 und der Motorwelle 50 gegenüber eindringendem Wasser ab. Die Lagerung der Motorwelle 50 in einem trockenen Bereich reduziert die Anforderungen an das verwendete zweireihige Rillenkugellager 80, da dieses nicht gesondert abgedichtet werden muss. Der Formadapter 70 stellt weiterhin die äußere Montagefläche 72.2 bereit, mit der die Antriebseinheit an den Rumpf 11 der Schwimm- und Tauchhilfe 10 montiert werden kann. Zusätzlich dient der Formadapter 70 der axialen Festlegung des zweireihigen Rillenkugellagers 80.

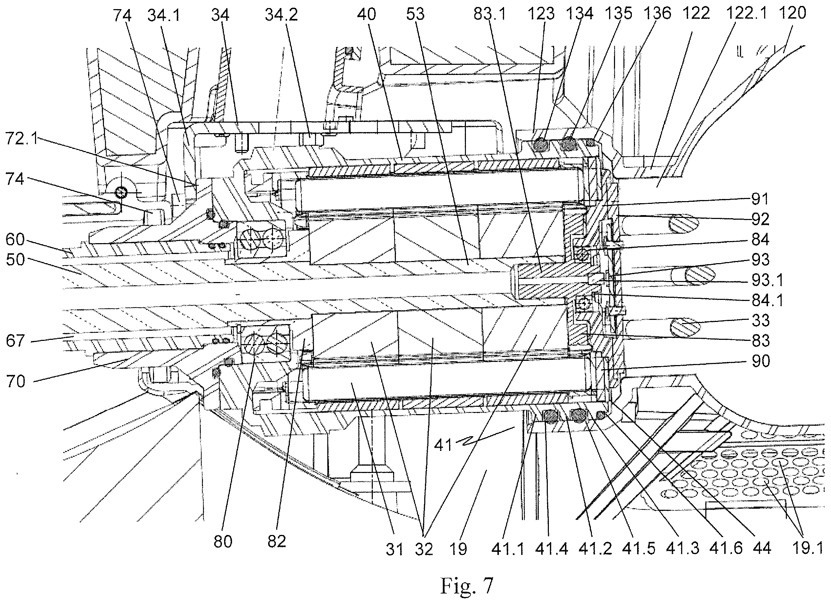

Das Motorgehäuse 40 ist aus Metall und im Wesentlichen zylindrisch ausgeführt. In seinem dem Flanschadapter 70 zugewandten Bereich bietet es die Adapterauflage 42.1 zur abgedichteten Montage des Flanschadapters 70 sowie den Lagerbereich für das zweireihige Rillenkugellager 80. Das Motorgehäuse 40 wird dabei in einem Fertigungsprozess hergestellt, so dass die genannten Funktionen kostengünstig umgesetzt werden können. Der Anschlussbereich 41 dient der wasserdichten Verbindung mit einem Elektronikgehäuse 120, wie dies zu Figur 7 beschrieben ist. Durch das Elektronikgehäuse 120 ist auch die von dem Formadapter 70 abgewandte Gehäuseöffnung 44 des Elektromotors 30 wasserdicht verschlossen, so dass der gesamte Elektromotor 30 in einen wasserdurchfluteten Raum der Schwimm- und Tauchhilfe 10 angeordnet und damit effizient gekühlt werden kann.

Der Stator 31 ist über eine Vergussmasse mit dem Motorgehäuse 30 verbunden, während der Rotor 32 fest mit der Motorwelle 50 verbunden ist. Zusammen mit der beschriebenen Lagerung der Motorwelle 50 ergibt sich so eine kompakte Bauweise für einen Elektromotor 30 mit einer hohen Antriebsleistung und einem guten, schwingungsarmen Rundlauf. Der Rundlauf wird weiterhin durch den vorgesehenen Rotorlagesensor 93 mit dem Scheibenmagnet 93.1 als Geber verbessert, indem der Rotorlagesensor 93 das sich in dem Elektromotor ausbildende Magnetfeld regelt und den Rotor 32 und den Stator 31 in eine gewünschte Zuordnung einstellt.

Der Aufnahmeschild 90 ist durch die Vergussmasse, in welcher der Stator 31 eingebettet ist, sicher festgelegt, so dass auch die nachfolgenden, mit dem Aufnahmeschild 90 mittelbar oder unmittelbar verbundenen Bauelemente positionsgenau gehalten sind. Die Anschlusskabel 33 dienen der elektrischen Verbindung des Elektromotors 30 und des Rotorlagesensors 93 mit einem in dem Elektronikgehäuse 120 gehaltenen Steuergerät.

Zur Montage der Anordnung werden zunächst die vordere Wuchtscheibe 82, der Rotor 32 und die hintere Wuchtscheibe 83, in welcher der Scheibenmagnet 93.1 eingeklebt ist, mit der Motorwelle 50 verklebt. Der Stator 31 wird zusammen mit dem Aufnahmeschild 90 mit Hilfe der Vergussmasse mit dem Motorgehäuse 40 verbunden. Der Lagerschild 91, das Wärmeausgleichslager 84, der Rotorlagesensor 93 und die Abdeckung 92 werden montiert, wobei die Anschlusskabel 33 rückseitig herausgeführt werden. Der erste und der zweite Dichtring 130, 131 werden in die Dichtringaufnahmen 63.1 des Außenrohrs 60 eingelegt und das Außenrohr 60 wird in die Rohraufnahme 71 des Formadapters 70 eingeklebt. Anschließend wird die Motorwelle 50 von der Seite des Anschlussbereichs 41 für das Elektronikgehäuse 120 in das Motorgehäuse 40 eingeführt und das zweireihige Rillenkugellager 80 auf den Lagersitz 82.1 geschoben. Nachdem das zweireihige Rillenkugellager 80 mit dem ersten Sicherungsring 81 festgelegt wurde wird das Außenrohr 60 über die Motorwelle 50 geschoben und der Formadapter 70, nachdem der dritte und der vierte Dichtringe 132, 133 eingesetzt wurden, mit Hilfe der Zylinderkopfschrauben 74 am Motorgehäuse 40 festgeschraubt. Es entsteht so eine kompakte Baueinheit aus Elektromotor 30 mit angeschlossener Motorwelle 50 und Außenrohr 60, die einfach in dem Rumpf 11 der Schwimm- und Tauchhilfe 10 zu montieren ist.

Figur 5 zeigt einen in Figur 3 gezeigten Propellerabschnitt V in einer vergrößerten Schnittdarstellung.

Die aus kohlenstofffaserverstärktem Kunststoff hergestellte Motorwelle 50 ist innerhalb des Außenrohres 60 geführt. Im Bereich ihres endseitigen zweiten Aufnahmeabschnitts 56 ist eine Wellenstumpfaufnahme 56.1 als axiale Bohrung mit einem im Vergleich zum Innendurchmesser der als Hohlwelle ausgeführten Motorwelle 50 größeren Durchmesser eingebracht. Der aus Aluminium bestehende Wellenstumpf 110 ist mit ist mit einem Befestigungsabschnitt 117 in die Wellenstumpfaufnahme 56.1 eingeführt und eingeklebt. Zur Ausbildung einer gleichmäßigen Klebstoffdicke sind in dem Befestigungsabschnitt 117 des Wellenstumpfes 110 umlaufende Klebstoffeintiefungen 118 eingearbeitet, in welchen sich der Klebstoff in einer durch die Tiefe der Klebstoffeintiefungen 118 vorgegebenen Dicke sammelt. Zur Gewichtseinsparung ist in den Befestigungsabschnitt 117 eine axiale vordere Bohrung 116 eingebracht.

Im Anschluss an den Befestigungsabschnitt 117 weist der Wellenstumpf 110 einen umlaufenden, radial ausgerichteten Bund 115 auf, der zur Motorwelle 50 hin durch einen als radial verlaufende Fläche ausgebildeten Wellenanschlag 115.2 und gegenüberliegend durch einen ebenfalls als radial verlaufende Fläche ausgebildeten Lageranschlag 115.1 begrenzt ist. Der Wellenanschlag 115.2 liegt umlaufend zu der Wellenstumpfaufnahme 56.1 an dem zweiten Aufnahmeabschnitt 56 der Motorwelle 50 an. Durch den Wellenanschlag 115.2 ist somit die Einbautiefe des Befestigungsabschnitts 117 in die Wellenstumpfaufnahme 56.1 festgelegt.

Dem Bund 115 schließt sich ein Lager- und Abdichtbereich 114 des Wellenstumpfes 110 mit einer zylindrischen Außenkontur an, der innerhalb des Außenrohres 60 angeordnet ist. Mit dem Abschluss des Außenrohres 60 geht der Wellenstumpf 110 in eine Propelleraufnahme 112 über. Von Seiten der Propelleraufnahme 112 ist eine axial verlaufende, hintere Bohrung 113 in den Wellenstumpf 110 eingebracht, die ausgehend von ihrer Öffnung ein Innengewinde 111 zur Montage des in Figur 6 gezeigten Propellers 150 aufweist.

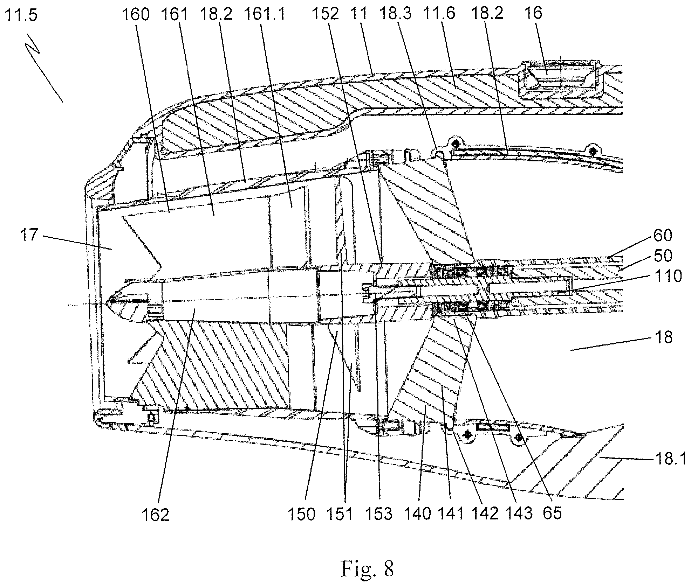

Das Außenrohr 60 umschließt die Motorwelle 50 sowie den Lager- und Abdichtbereich 114 des Wellenstumpfes 110 bis hin zu der Propelleraufnahme 112, die aus dem Außenrohr 60 ragt. Im Bereich einer Rohrverstärkung 64, welche einen Teil des Lager- und Abdichtbereichs 114 umschließt, steigt die Wandstärke des Außenrohres 60 an. Anschließend ist die Wandstärke an einem Übergang der Rohrverstärkung 64 zu einem Zentrierabschnitt 65 stufenförmig reduziert. Der stufenförmige Übergang bildet einen zum Ende des Außenrohres 60 hin ausgerichteten Anschlag 64.1. Der Zentrierabschnitt 65 dient der Aufnahme eines Zentriersterns 140, wie dies zu Figur 8 gezeigt ist. Der Zentrierstern 140 ist mit dem Zentrierabschnitt 140 verklebt. Zur Ausbildung einer geeignet dicken Klebstoffschicht sind umlaufende Klebstofffugen 66 an dem Zentrierabschnitt 140 vorgesehen. Der Zentrierstern 140 kann so bis zu dem Anschlag 64.1 auf den Zentrierabschnitt 140 aufgeschoben und mit diesem verklebt werden.

Die Motorwelle 50 ist im Lager- und Abdichtbereich 114 des Wellenstumpfes 110 gelagert. Dazu ist ein Rillenkugellager 105 zwischen dem Außenrohr 60 und dem Lager- und Abdichtbereich 114 angeordnet. Der Innenring des Rillenkugellagers 105 liegt an dem durch den Bund 115 gebildeten Lageranschlag 115.1 an und ist somit axial in Richtung zur Motorwelle 50 festgelegt. In die entgegengesetzte Richtung liegt der Außenring des Rillenkugellagers 105 an einer Wellenfeder 104 an, die gegenüberliegend durch einen vierten Sicherungsring 104.1 axial gehalten ist. Die Wellenfeder 104 ist als Flachdraht-Wellenfeder und damit platzsparend ausgeführt. Sie ermöglicht dem Rillenkugellager 105 eine axiale Bewegung, so dass unterschiedliche Wärmedehnungen zwischen der Motorwelle 50 und dem Außenrohr 60 ausgeglichen werden können. Dem vierten Sicherungsring 104.1 folgt ein zweiter Distanzring 103.2, welcher einen zweiten Radialwellendichtring 102.2 beabstandet zu dem vierten Sicherungsring 104.1 festlegt. Beabstandet durch einen ersten Distanzring 103.1 ist ein erster Radialwellendichtring 102.2 zwischen dem Außenrohr 60 und dem Lager- und Abdichtbereich 114 des Wellenstumpfes 110 angeordnet. Dem ersten Radialwellendichtring 102.2 folgen zwei benachbart angeordnete Filzringe 101.3, 101.4, welche von einem mit einem Filzringträger-Deckel 101.5 abgeschlossenen Filzringträger 101.2 derart gehalten sind, dass sie an dem Lager- und Abdichtbereich 114 anliegen. Gegenüberliegend zu dem zweiten Filzring 101.4 liegt der Filzringträger-Deckel 101.5 an dem ersten Radialwellendichtring 102.2 an und legt diesen damit axial fest. Der Filzringträger 101.2 ist zum Ende des Außenrohres 60 hin durch einen dritten Sicherungsring 101.1, welcher in einer umlaufenden Nut des Außenrohres 60 festgeklemmt ist, gehalten.

Durch das Rillenkugellager 105 ist die Motorwelle 50 an ihrem dem Propeller 150 zugewandten Ende gelagert. Zusammen mit dem in Figur 4 gezeigten zweireihigen Rillenkugellager 80 ist die Motorwelle 50 somit auf ihrem Übertragungsweg von dem Elektromotor 30 zu dem Propeller 150 jeweils endseitig gelagert. Dadurch kann ein Verbiegen der Motorwelle 50 oder ein Schwingen der Motorwelle mit dem montierten Propeller 150 sicher vermieden werden.

Durch die beiden Radialwellendichtringe 102.1, 102.2 und die Filzringe 101.3, 101.4 ist der Bereich des Rillenkugellagers 105 sowie der Raum 67 zwischen der Motorwelle 50 und dem Außenrohr 60 gegen eindringendes Wasser und eindringenden Schmutz abgedichtet.

Die propellerseitige Lagerung und Abdichtung der Motorwelle 50 erfolgt auf dem Lager- und Abdichtbereich 114 des aus Aluminium hergestellten Wellenstumpfes 110 als axialer Verlängerung der Motorwelle 50. Der Wellenstumpf stellt ein Kraft-Übertragungselement dar, mit dem die von dem Rillenkugellager 105 eingebrachten Führungskräfte auf die Motorwelle 50 übertragen werden. Die Lagerung der Motorwelle 50 und die Abdichtung des abgedichteten Raums 67 erfolgt somit nicht direkt auf der druck- und abriebempfindlichen Motorwelle 50 aus kohlestofffaserverstärktem Kunststoff, sondern auf einem entsprechend dauerbeständigen Metallbauteil.

Figur 6 zeigt die in Figur 1 gezeigte Schwimm- und Tauchhilfe 10 in einer seitlichen Schnittdarstellung. Für gleiche Bauteile sind dabei die gleichen Bezeichner verwendet.

Der Rumpf 11 der Schwimm- und Tauchhilfe 10 ist aus einem Unterteil 11.4 und einem Oberteil 11.6 gebildet. Innerhalb des Rumpfes 11 ist eine Unterwasser-Antriebs-Einheit angeordnet. Der Unterwasser-Antriebs-Einheit sind in dem vorliegenden Ausführungsbeispiel der Elektromotor 30, ein Elektronikgehäuse 120 mit einem nicht dargestellten Steuergerät, die aus kohlenfaserverstärktem Kunststoff hergestellte Motorwelle 50 mit dem umgebenden Außenrohr 50, der Zentrierstern 140 und der Propeller 150 zugeordnet.

Das Elektronikgehäuse 120 ist durch zwei Gehäusehälften 121 gebildet und kann durch Entnahme einer Gehäusehälfte 121 geöffnet werden. In der gewählten Schnittzeichnung ist lediglich die backbordseitige erste Gehäusehälfte 121 dargestellt. Eine nicht dargestellte zweite Gehäusehälfte liegt wasserdicht mit einer umlaufenden zweiten Schließfläche auf einer Schließfläche 121.1 der ersten Gehäusehälfte 121 auf. Dazu ist zwischen den beiden Schließflächen 121.1 eine nicht dargestellte Dichtung vorgesehen. Dem Elektronikgehäuse 120 ist über einen Öffnungsabschnitt 122, der eine Öffnung 122.1 des Elektronikgehäuses 120 umschließt, ein die Öffnung 122.1 nachfolgend umschließender Abdichtabschnitt 123 zugeordnet, wie dies näher in Figur 7, welche den mit VII bezeichneten Ausschnitt vergrößert darstellt, gezeigt ist. Das Elektronikgehäuse 120 wechselt zum Abdichtabschnitt 123 hin von einer flachen zu einer zylindrischen Bauform. Mit diesem zylindrisch geformten Abdichtabschnitt 123 ist das Elektronikgehäuse 120 auf den endseitig an dem ebenfalls zylindrischen Motorgehäuse 30 vorgesehenen Anschlussbereich 41 aufgesteckt. Dadurch ist das Elektronikgehäuse 120 wasserdicht mit dem Motorgehäuse 30 verbunden.

Das Elektronikgehäuse 120 ist mit Hilfe eines Montagewinkels 124 und zugehörigen Befestigungselementen 124.1 in dem Flutungsraum 19 gehalten. Der Flutungsraum 19 weist Flutungsöffnungen 19.1 auf, durch die Wasser in den Flutungsraum 19 einfließen kann. Auch der Elektromotor 30 ist innerhalb des Flutungsraums 19 angeordnet. Der Elektromotor 30 ist an dem Rumpf 11 befestigt.

Die Motorwelle 50 ist innerhalb des Außenrohres 60 von dem Elektromotor 30 in den Strömungskanal 18 der Schwimm- und Tauchhilfe 10 geführt. Der Strömungskanal 18 erstreckt sich von einer Einströmöffnung 18.4 an der Unterseite der Schwimm- und Tauchhilfe 10 bis zum Strahlaustritt 17 an deren Heck 11.5. Er kann einstückig in dem Rumpf 11 ausgeformt sein. Im vorliegenden Ausführungsbeispiel wir der Strömungskanal 18 von einer Oberschale und einer Unterschale gebildet, die mittels geeigneter Befestigungsmittel miteinander verbunden sind. Im Bereich der Einströmöffnung 18.4 ist ein Leitelement 18.1 vorgesehen, an dem das Wasser vorbeiströmt und das eine untere Auflage der Schwimm- und Tauchhilfe 10 bildet.

Das Außenrohr 60 ist endseitig mit Hilfe des aus Kunststoff gefertigten Zentriersterns 140 innerhalb des Strömungskanals 18 gehalten. Der Propeller 150 ist auf dem Wellenstumpf 110 montiert, wie dies deutlicher in Figur 8, welche den mit VIII bezeichneten Ausschnitt vergrößert darstellt, gezeigt ist. Im Anschluss ist der Stator 160 in dem Strömungskanal 18 befestigt.

Durch den abgedichteten, steckbaren Verbund des Elektronikgehäuses 120 mit dem Motorgehäuse 30, dem abgedichteten Anschluss des Außenrohres 60 an dem Motorgehäuse 30, wie dies zu Figur 4 beschrieben ist, sowie die propellerseitige Abdichtung zwischen dem Außenrohr 60 und der Motorwelle 50, wie dies in Figur 5 gezeigt ist, entsteht eine vollständig eingekapselte Unterwasser-Antriebs-Einheit. Diese kann in mit Wasser flutbare Bereiche innerhalb des Rumpfes 10 der Schwimm- und Tauchhilfe 10 angeordnet werden. Im vorliegenden Ausführungsbeispiel sind der Elektromotor 30 und die in dem Elektronikgehäuse 120 angeordnete Steuerungseinheit in dem Flutungsraum 19 angeordnet, während das Außenrohr 60 mit der Motorwelle 50 in dem Strömungskanal 18 angeordnet ist. Der Flutungsraum 19 wird beim Eintauchen der Schwimm- und Tauchhilfe 10 durch die Flutungsöffnungen 19.1 und die Wassereintritts- und austrittsöffnungen 15.2, 15.3 mit Wasser geflutet, wobei die verdrängte Luft über die Entlüftungsöffnungen 15.1 entweicht, wie dies in Figur 1 gezeigt ist. Bewegt sich die Schwimm- und Tauchhilfe 10 durch das Wasser, entsteht eine Strömung innerhalb des Flutungsraums 19, wobei das Wasser in die am Bug 11.1 befindlichen Wassereintrittsöffnungen 15.2 einströmt und durch die am Heck 11.5 angeordneten Wasseraustrittsöffnungen 15.3 wieder ausströmt. Der Elektromotor 30 und das Steuergerät sind so durch das vorbeiströmende Wasser effizient gekühlt. Verlustwärme kann schnell abgeführt werden, so dass ein Elektromotor 30 und ein zugehöriges Steuergerät mit einer sehr hohen Leistung installiert werden können.

Der Elektromotor 30 treibt über die Motorwelle 50 den Propeller 150 an. Dieser erzeugt einen Wasserstrom innerhalb des Strömungskanals 18 von der Einströmöffnung 18.4 zu dem Strahlaustritt 17, wodurch die Schwimm- und Tauchhilfe 10 angetrieben wird. Der Zentrierstern 140 fixiert die Position des Außenrohres 60 endseitig, so dass sich das Außenrohr 60 und die darin gelagerte Motorwelle 50 auch bei hohen Strömungsgeschwindigkeiten des in dem Strömungskanal 18 fließenden Wassers nicht verbiegt oder schwingt. Es wird so eine Unterwasser-Antriebs-Einheit erhalten, welche eine hohe Laufruhe aufweist.

Figur 7 zeigt einen in Figur 6 gezeigten Ausschnitt VII der Schwimm- und Tauchhilfe 10 im Bereich des Elektromotors 30.

Das Elektronikgehäuse 120 ist mit seinem Abdichtabschnitt 123 auf den Anschlussbereich 41 des Motorgehäuses 40 aufgesteckt. In den Rillen 41.4, 41.5, 41.6 des Anschlussbereichs 41 ist jeweils ein Dichtring 134, 135, 136 gehalten. Die Rillen 41.4, 41.5, 41.6 und damit die Dichtringe 134, 135, 136 sind umlaufend zum Motorgehäuse 40 und quer zur Aufsteckrichtung des Elektronikgehäuses 120 ausgerichtet. Der Abdichtabschnitt 123 des Elektronikgehäuses 120 ist so dimensioniert, dass er das Motorgehäuse 40 im Anschlussbereich 41 derart umgreift, dass die Dichtringe 134, 135, 136 zwischen den Rillen 41.4, 41.5, 41.6 und dem Abdichtabschnitt 123 eingeklemmt sind und somit die Innenbereiche des Elektronikgehäuses 120 und des Motorgehäuses 40 gegenüber dem umgebenden Flutungsraum 19 abdichten. Der dem Formadapter 70 abgewandte axiale Abschluss des Motorgehäuses 40 mit den Durchlässen für die Anschlusskabel 33 kann so offen und wasserdurchlässig ausgeführt werden. Die steckbare Verbindung zwischen dem Motorgehäuse 40 und dem Elektronikgehäuse 120 ermöglicht eine einfache und schnelle Montage sowie einen einfachen Zugang im Servicefall. Zur Montage werden zunächst die Dichtringe 134, 135, 136 in die Rillen 41.4, 41.5, 41.6 eingelegt. Anschließend werden die Anschlusskabel 33 mit dem Elektromotor 30 und dem Steuergerät verbunden. Danach werden die Gehäusehälften 121 des Elektronikgehäuses 120 geschlossen und das Elektronikgehäuse 120 wird mit seinem Abdichtabschnitt 123 auf den Anschlussbereich 41 geschoben.

Der Elektromotor 40 ist über einen Montagewinkel 34 mit dem Rumpf 11 der Schwimm- und Tauchhilfe 10 verbunden. Dazu ist der Montagewinkel 34 mit einem Schenkel mit geeigneten Befestigungselementen 34.2 an den Rumpf 11 montiert. Ein abgewinkelter Schenkel 34.1 weist einen Durchbruch auf, durch den der Formadapter 70 geführt ist. Der Formadapter 70 liegt mit seiner äußeren Montagefläche 72.1 umlaufend am Rand des Durchbruchs des abgewinkelten Schenkels 34.1 an. Umlaufend zu dem Durchbruch weist der abgewinkelte Schenkel 34.1 Bohrungen auf, durch welche die Zylinderkopfschrauben 74 geführt sind. Die Zylinderkopfschrauben 74 verbinden somit den Montagewinkel 34, den Formadapter 70 und das Motorgehäuse 40. An einer Position am Umfang des Durchbruchs ist keine der ansonsten rotationssymmetrisch angeordneten Schraubverbindungen vorgesehen. Dadurch ist die radiale Montageposition des Elektromotors 30 eindeutig festgelegt.

Figur 8 zeigt einen in Figur 6 gezeigten Ausschnitt VIII der Schwimm- und Tauchhilfe 10 im Bereich ihres Hecks 11.5 im montierten Zustand.

Der Strömungskanal 18 ist durch eine Strömungskanalwandung 18.2, welche sich in eine Ober- und eine Unterschale aufteilt, umschlossen. Der Stator 140 ist mit einer Montagehülse 143 auf den Zentrierabschnitt 65 des Außenrohres 60 bis zu dem in Figur 5 gezeigten Anschlag 64.1 aufgeschoben und mit dem Zentrierabschnitt 65 verklebt. An der Montagehülse 143 angeformte Zentrierflügel 141 sind zur Strömungskanalwandung 18.2 geführt und an dieser festgelegt. Die Zentrierflügel 141 weisen an ihrem äußeren Ende jeweils eine Rastnase 142 auf, welche in entsprechende Rastaufnahmen 18.3 in der Strömungskanalwandung 18.2 eingreifen. Der Zentrierstern 140 hält somit das Außenrohr 60 und damit die Motorwelle 40 in ihrer Position innerhalb des Strömungskanals 18. Dabei sind die Zentrierflügel 141 in Strömungsrichtung des Wassers derart geformt, dass sie einen möglichst geringen Strömungswiderstand aufweisen.

Der Propeller 150 ist aus einem Basiskörper 152 und daran angeformten Propellerflügeln 151 gebildet. Der Propeller 150 ist mit dem Basiskörper 152 auf die in Figur 5 gezeigte Propelleraufnahme 112 des Wellenstumpfes 110 aufgesteckt und mit dieser durch eine Montageschraube 153 verbunden. Dazu ist die Montageschraube 153 durch eine axial verlaufende Bohrung des Basiskörpers 152 geführt und in die mit dem Innengewinde 111 versehene hintere Bohrung 113 des Wellenstumpfes 110 eingeschraubt. Der Propeller 150 ist somit fest, jedoch leicht montierbar mit der Motorwelle verbunden. Durch die Lagerung des Außenrohres 60 durch den Zentrierstern 140 hält der Propeller 150 seine exakte Position in dem Strömungskanal 18 auch bei starker seitlicher Belastung durch vorbeiströmendes Wasser.

Im Anschluss an den Propeller 150 ist der Stator 160 mit Statorflügeln 161 nicht drehbar an der Strömungskanalwandung 18.2 festgelegt. Die Statorflügel 161 sind an einen zentralen Träger 162 angeformt, der in axialer Verlängerung des Basiskörpers 152 des Propellers 150 und damit strömungstechnisch günstig angeordnet ist. Die Statorflügel 161 weisen zum Propeller 150 hin abgewinkelte Bereiche 161.1 auf. Diese sind so ausgerichtet, dass sie den durch den Propeller 150 bewirkten Drall des ausgestoßenen Wassers geraderichten, so dass die Rotationsenergie des Wassers in eine geradlinige Bewegungsenergie umgewandelt und damit dem Antrieb der Schwimm- und Tauchhilfe 10 zugeführt wird.

## Patentansprüche

1. Unterwasser-Antriebs-Einheit für eine Schwimm- und Tauchhilfe (10), wobei der Unterwasser-Antriebs-Einheit zumindest ein Propeller (150), ein Elektromotor (30) mit einem Motorgehäuse (40), eine Motorwelle (50), welche die Antriebskraft des Elektromotors (30) auf den Propeller (150) überträgt, und ein Steuergerät, welches in einem Elektronikgehäuse (120) angeordnet und über Anschlusskabel (33) mit dem Elektromotor (30) verbunden ist, zugeordnet sind und wobei zumindest ein Teil der Unterwasser-Antriebs-Einheit in zumindest einem mit Wasser flutbaren Raum in einem Rumpf (11) der Schwimm- und Tauchhilfe (10) angeordnet ist,
wobei
der flutbare Raum einen Flutungsraum (19) aufweist **dadurch gekennzeichnet**
**dass** eine in dem Elektronikgehäuse (120) angeordnete Steuerungseinheit und der Elektromotor (30) in dem Flutungsraum (19) angeordnet sind, dass das Elektronikgehäuse (120) umlaufend zu einer Öffnung (122.1) des Elektronikgehäuses (120)
und zu einer Gehäuseöffnung (44) des Motorgehäuses (40) wasserdicht mit dem Motorgehäuse (40) verbunden ist,
**dass** die Motorwelle (50) zumindest bereichsweise von einem Außenrohr (60) umgeben ist,
**dass** das Außenrohr (60) gegenüber dem flutbaren Raum derart abgedichtet ist, dass zwischen dem Außenrohr (60) und der Motorwelle (60) ein gegenüber dem flutbaren Raum hin abgedichteter Raum gebildet ist,
**dass** das Außenrohr (60) mit seinem dem Elektromotor (30) zugewandten Ende mittelbar
oder unmittelbar mit dem Motorgehäuse (40) des Elektromotors (30) dicht verbunden ist,
und **dass** die Motorwelle (50) innerhalb des Außenrohres (60) von dem Elektromotor (30) in einen Strömungskanal (18) der Schwimm- und Tauchhilfe (10) geführt ist.

2. Unterwasser-Antriebs-Einheit nach Anspruch 1,
**dadurch gekennzeichnet,**
**dass** das Elektronikgehäuse (120) wasserdicht steckbar mit dem Motorgehäuse (40) verbunden ist.

3. Unterwasser-Antriebs-Einheit nach Anspruch 1 oder 2,
**dadurch gekennzeichnet,**
**dass** das Elektronikgehäuse (120) mit einem die Öffnung (122.1) umlaufenden Abdichtabschnitt (123) das Motorgehäuse (40) in einem Anschlussbereich (41) steckbar umgreift und dass zwischen dem Abdichtabschnitt (123) und dem Anschlussbereich (41) Dichtelemente vorgesehen sind.

4. Unterwasser-Antriebs-Einheit nach Anspruch 3,
**dadurch gekennzeichnet,**
**dass** an dem Motorgehäuse (40) umlaufend zum Anschlussbereich (41) zumindest eine quer zur Aufsteckrichtung des Elektronikgehäuses (120) verlaufende, von Stegen (41.1, 41.2, 41.3) begrenzte Rille (41.4, 41.5, 41.6) angeordnet ist und dass ein Dichtring (134, 135, 136) als Dichtelement in der Rille (41.4, 41.5, 41.6) gehalten ist.

5. Unterwasser-Antriebs-Einheit nach Anspruch 3 oder 4,
**dadurch gekennzeichnet,**
**dass** das Motorgehäuse (40) eine im Wesentlichen zylindrische Außenkontur aufweist, dass das Motorgehäuse (40) auf seiner dem Propeller (150) abgewandten Seite offen ist, dass der Anschlussbereich (41) umlaufend zu der so gebildeten Gehäuseöffnung (44) auf der Außenkontur des Motorgehäuses (40) angeordnet ist und dass das Elektronikgehäuse (40) mit seinem Abdichtabschnitt (123) von der dem Propeller (150) abgewandten Seite auf das Motorgehäuse (40) derart aufsteckbar ist, dass der Abdichtabschnitt (123) des Elektronikgehäuses (40) den Anschlussbereich (41) umgreift.

6. Unterwasser-Antriebs-Einheit nach einem der Ansprüche 1 bis 5,
**dadurch gekennzeichnet,**
**dass** die Anschlusskabel (33) durch die Öffnung (122.1) des Elektronikgehäuses (120) und durch die Gehäuseöffnung (44) des Motorgehäuses (40) geführt sind.

## Claims

1. An underwater propulsion unit for a swimming and diving aid (10), wherein at least one propeller (150), an electric motor (30) with a motor housing (40), a motor shaft (50), which transmits the driving force of the electric motor (30) to the propeller (150), and a control device, which is arranged in an electronics housing (120) and is connected to the electric motor (30) via connection cables (33), are assigned to the underwater propulsion unit, and wherein at least part of the underwater propulsion unit is arranged in at least one water-floodable space in a hull (11) of the swimming and diving aid (10), the floodable space having a flooding chamber (19),
**characterized**
**in that** a control unit arranged in the electronics housing (120) and the electric motor (30) are arranged in the flooding chamber (19), that the electronics housing (120) is connected to the motor housing (40) in a water-tight manner circumferentially to an opening (122.1) of the electronics housing (120) and to a housing opening (44) of the motor housing (40), that the motor shaft (50) is surrounded, at least in some regions, by an outer pipe (60), that the outer pipe (60) is sealed with respect to the floodable space in such a way that a space sealed with respect to the floodable space is formed between the outer pipe (60) and the motor shaft (60), that the outer pipe (60) is connected in a sealed manner, directly or indirectly, to the motor housing (40) of the electric motor (30) at its end facing the electric motor (30), and that the motor shaft (50) is guided from the electric motor (30) into a flow channel (18) of the swimming and diving aid (10) within the outer pipe (60).

2. The underwater propulsion unit according to claim 1, **characterized in that** the electronics housing (120) is connected to the motor housing (40) in a watertight plug-in manner.

3. The underwater propulsion unit according to claim 1 or 2, **characterized in that** the electronics housing (120) encompasses the motor housing (40) in a plug-in manner in a connection region (41) by means of a sealing portion (123) that extends around the opening (122.1), and sealing elements are provided between the sealing portion (123) and the connection region (41).

4. The underwater propulsion unit according to claim 3, **characterized in that** at least one groove (41.4, 41.5, 41.6) running transversely to the plug-in direction of the electronics housing (120) and bounded by webs (41.1, 41.2, 41.3) is arranged on the motor housing (40) circumferential to the connection area (41), and that a sealing ring (134, 135, 136) is held in the groove (41.4, 41.5, 41.6) as a sealing element.

5. The underwater propulsion unit according to claim 3 or 4, **characterized in that** the motor housing (40) has a substantially cylindrical outer contour, **in that** the motor housing (40) is open on its side facing away from the propeller (150), that the connection region (41) is arranged on the outer contour of the motor housing (40) so as to extend circumferentially around the housing opening (44) formed in this way, and that the electronics housing (40) can be placed, by means of its sealing portion (123), from the side facing away from the propeller (150), onto the motor housing (40) in such a way that that the sealing portion (123) of the electronics housing (40) engages around the connection region (41).

6. The underwater propulsion unit according to one of claims 1 to 5, **characterized in that** the connection cables (33) are routed through the opening (122.1) of the electronics housing (120) and through the housing opening (44) of the motor housing (40).

## Revendications

1. Unité d'entraînement sous-marine pour une aide à la natation et à la plongée (10), dans laquelle l'unité d'entraînement sous-marine comprend au moins une hélice (150), un moteur électrique (30) avec un boîtier de moteur (40), un arbre moteur (50) qui transmet la force d'entraînement du moteur électrique (30) à l'hélice (150), et un appareil de commande qui est disposé dans un boîtier électronique (120) et qui est relié au moteur électrique (30) par des câbles de raccordement (33), et au moins une partie de l'unité d'entraînement sous-marine étant disposée dans au moins un espace pouvant être inondé d'eau dans une coque (11) de l'aide à la natation et à la plongée (10), l'espace pouvant être inondé présentant un compartiment d'inondation (19),
**caractérisé**
**en ce qu'**une unité de commande disposée dans le boîtier électronique (120) et le moteur électrique (30) sont disposés dans le compartiment d'inondation (19), en ce que le boîtier électronique (120) est disposé de manière périphérique par rapport à une ouverture (122. 1) du boîtier électronique (120) et à une ouverture de boîtier (44) du boîtier de moteur (40), en ce que l'arbre de moteur (50) est entouré au moins par zones par un tube extérieur (60), en ce que le tube extérieur (60) est étanchéifié par rapport à l'espace inondable de telle sorte qu'un espace étanchéifié par rapport à l'espace inondable est formé entre le tube extérieur (60) et l'arbre de moteur (60), en ce que le tube extérieur (60) est relié de manière étanche, directement ou indirectement, par son extrémité tournée vers le moteur électrique (30), au boîtier de moteur (40) du moteur électrique (30), et en ce que l'arbre moteur (50) est guidé à l'intérieur du tube extérieur (60) par le moteur électrique (30) dans un canal d'écoulement (18) de l'aide à la natation et à la plongée (10).

2. Unité d'entraînement sous-marine selon la revendication 1, **caractérisée en ce que** le boîtier électronique (120) est relié de manière enfichable et étanche à l'eau au boîtier de moteur (40).

3. Unité d'entraînement sous-marine selon la revendication 1 ou 2, **caractérisée en ce que** le boîtier électronique (120) entoure de manière enfichable le boîtier de moteur (40) dans une zone de raccordement (41) avec un tronçon d'étanchéité (123) entourant l'ouverture (122.1) et **en ce que** des éléments d'étanchéité sont prévus entre le tronçon d'étanchéité (123) et la zone de raccordement (41).

4. Unité d'entraînement sous-marine selon la revendication 3, **caractérisée en ce qu'**au moins une rainure (41.4, 41.5, 41.6) s'étendant transversalement à la direction d'enfichage du boîtier électronique (120) et délimitée par des entretoises (41.1, 41.2, 41.3) est disposée sur le boîtier de moteur (40) sur le pourtour de la zone de raccordement (41), et **en ce qu'**une bague d'étanchéité (134, 135, 136) est maintenue comme élément d'étanchéité dans la rainure (41.4, 41.5, 41.6).

5. Unité d'entraînement sous-marine selon la revendication 3 ou 4, **caractérisée en ce que** le boîtier de moteur (40) présente un contour extérieur sensiblement cylindrique, **en ce que** le boîtier de moteur (40) est ouvert sur sa face opposée à l'hélice (150), **en ce que** la zone de raccordement (41) est disposée sur le contour extérieur du boîtier de moteur (40) en faisant le tour de l'ouverture de boîtier (44) ainsi formée, et **en ce que** le boîtier électronique (40) peut être emboîté avec son tronçon d'étanchéité (123) sur le boîtier de moteur (40) depuis le côté opposé à l'hélice (150) de telle sorte que le tronçon d'étanchéité (123) du boîtier électronique (40) entoure la zone de raccordement (41).

6. Unité d'entraînement sous-marine selon l'une des revendications 1 à 5, **caractérisée en ce que** les câbles de raccordement (33) passent par l'ouverture (122.1) du boîtier électronique (120) et par l'ouverture de boîtier (44) du boîtier de moteur (40).
